# EUROPEAN PATENT APPLICATION

(11) **EP 1 245 973 A1**
(43) Date of publication of application: **02.10.2002**
(21) Application number: 01303031.7
(22) Date of filing: 30.03.2001
(51) Int. Cl.: G02B 6/26, H01S 3/094

(54) **Optical fiber terminations, optical couplers and optical coupling methods**

(71) Applicant: UNIVERSITY OF SOUTHAMPTON, Southampton, Hampshire SO17 1BJ (GB)
(72) Inventor: Grudinin, Anatoly Borisovich, Southampton SO17 1BJ, Hampshire (GB); Nilsson, Johan, Southampton SO17 1BJ, Hampshire (GB); Clarkson, William Andrew, Southampton SO17 1BJ, Hampshire (GB)
(74) Representative: Haines, Miles John

(57) **Abstract**

An optical coupler for coupling a signal light beam from a signal port (100) and a pump light beam from a pump port (110) into a common port (120) for coupling the pump and signal beams into a double-clad (DC) optical fiber (122) comprising a core (123), an inner clad (124) and an outer clad (125). The DC optical fiber has a section of coreless fiber (128) joined to it to form an extension piece. A free-space optical arrangement (130) combines the pump and signal light beams onto the common port so that the signal light beam is focused onto the core aperture at the buried interface (121) between the DC optical fiber and the coreless extension piece. The high power density signal beam focus is thus moved away from a more sensitive air:glass interface into a buried interface which has a higher damage threshold. In this way, higher signal beam powers can be handled. The invention allows higher power DC pumped amplifiers and lasers to be fabricated.

## Description

### BACKGROUND OF THE INVENTION

The invention relates to optical couplers for coupling a signal light beam and a pump light beam into an optical fiber, to optical coupling methods, to optical fiber terminations suitable for optical couplers, and to devices incorporating an optical coupler, such as fiber lasers and optical amplifiers.

Double-clad (DC) optical fiber is a known type of fiber in which the cladding region of a conventional optical fiber is replaced with separate inner and outer cladding regions. DC fibers allow a multi-mode pump light beam to be coupled into an optical fiber in which the core is used to guide a signal light beam to be amplified.

Cladding-pumping using DC optical fiber allows lasers and amplifiers to be scaled to higher optical output powers than is possible with alternative core-pumping schemes. Furthermore, cladding-pumped devices can be cheaper than core-pumped devices. DC fibers are often activated with a laser-active impurity dopant, typically located to the core of the fiber. When the laser-active dopant is optically pumped to an excited state by light at an appropriate wavelength, the doped medium provides optical gain for signal light guided by a core. The fiber can then be used as a waveguiding optical amplifier, a source of amplified spontaneous emission, or a laser (if there is some optical feedback to create an optical cavity around the gain medium). The laser-active impurity dopant is typically a rare-earth ion. The most commonly used dopants are Yb, Nd, Tm, Er, and a combination of Er and Yb.

Rare-earth (RE) doped fibers find very important and well-known applications in fields such as optical telecommunications. The higher powers possible with cladding-pumping are also useful in devices for telecommunications, e.g., erbium-doped fiber amplifiers and pump lasers for Raman amplifiers and lasers. Furthermore, there are other applications, for example printing.

RE doped fibers and their fabrication are well-known in the art. DC RE-doped fibers are also well-known in the art. DC fibers differ from other optical fibers in that in addition to the primary waveguide (core) for guiding signal light, they also provide a secondary waveguide extending along the core for guiding pump light. The cross-section of a fiber is typically uniform along the length of the fiber, although some longitudinal variations are possible as long as the fiber retains its waveguiding capabilities. The core forms a part of the secondary waveguide. Typically, the core has a refractive index that is higher than that of surrounding regions. This enables waveguiding. However, other forms of waveguides are also known in the art and are also possible. For example, micro-structured fibers may guide by an average-index effect or by a photonic bandgap effect. The core is often single-moded at the signal wavelength (especially for telecom applications). The pump waveguide is surrounded by an outer cladding, which normally has a lower refractive index than the pump waveguide, although there are alternatives to a simple index difference for the guiding of the pump light. Since the core forms a part of the pump waveguide, the pump light can reach the laser-active dopant even though this is typically predominantly restricted to the core.

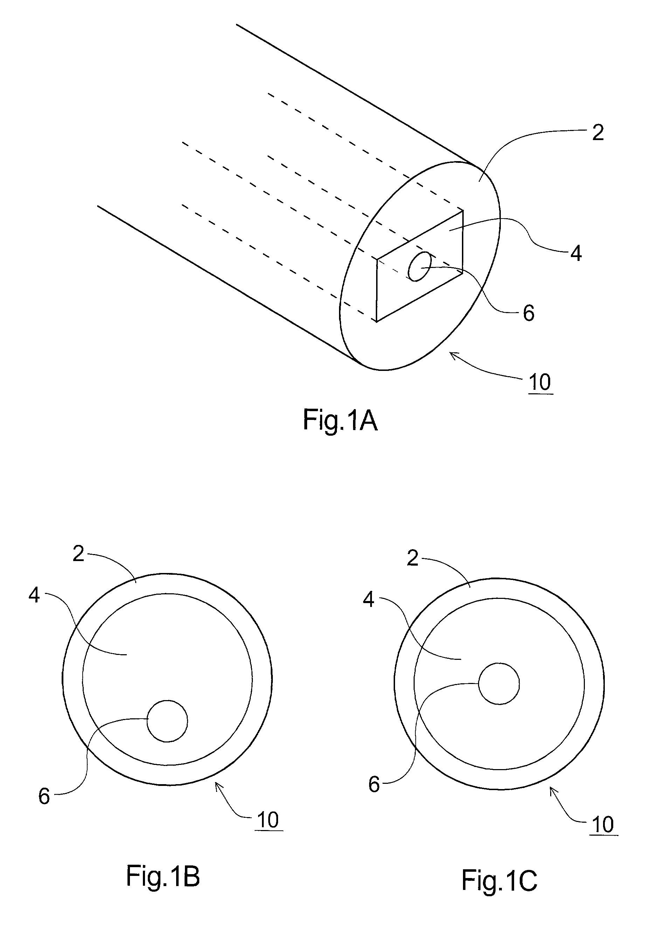

Figures 1A to 1C of the accompanying drawings shows some different DC fibers 10, in each case comprising a core 6, inner clad 4 and outer clad 2.

It should be noted that a double-clad fiber does not have to be doped with laser-active dopant. Instead, the fiber may be passive (non-amplifying), while still designed according to Figures 1A to 1C.

The ability to launch a multi-moded pump beam into the pump waveguide is a key functionality of cladding-pumped optical fiber devices.

There are a number of desired characteristics for any design of optics for coupling a signal light beam (usually single-mode) and a multi-mode pump beam into a common optical fiber for amplification or some other purpose.
1. The coupling should be designed to withstand high power, e.g. 1 - 10 W. This is because cladding-pumped fiber devices often need to be used at the highest powers possible.
2. The coupling should leave the input and/or output ports accessible for splicing. This is preferable because it is often necessary or at least desirable to couple signals into and/or out from the amplifier or laser by means of fibers spliced to the amplifier/laser.
3. The coupling scheme should be cascadable so that a number of fiber devices may be pumped with a number of pump couplers in series.
4. The coupling scheme should be able to preserve the brightness of the diode.

Several methods for launching the pump power into a DC fiber exist in the prior art, but they all have some shortcomings.

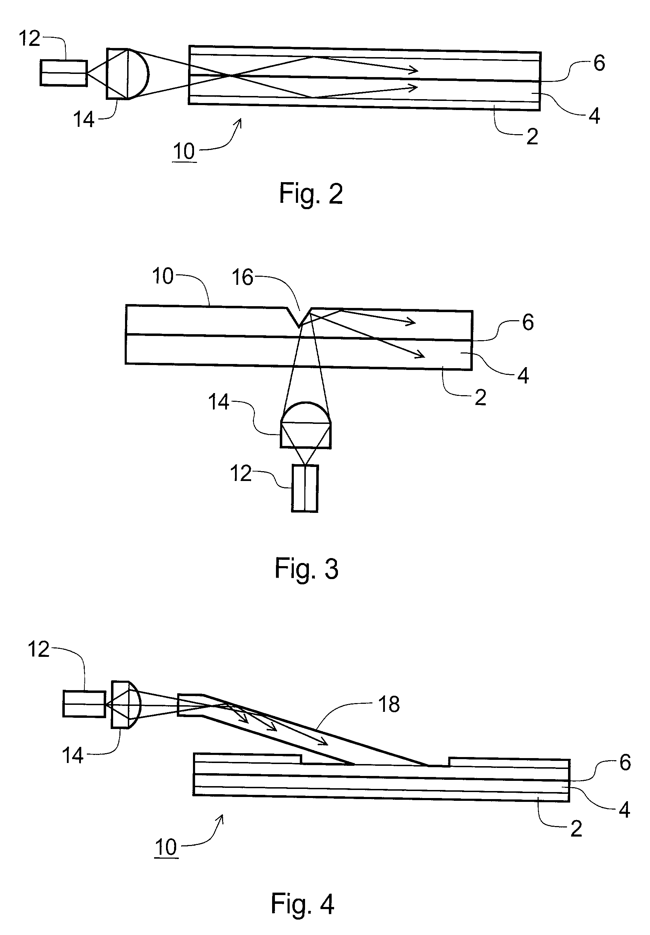

Figure 2 of the accompanying drawings schematically illustrates a first coupling method which is traditional end-pumping. With this approach, a pump beam from a laser diode pump source 12 is coupled into the end face of a DC fiber 10 by a lens arrangement 14. The problem with this approach is that at least one of the fiber ends is not accessible for splicing. Therefore, it is not suitable for an amplifier. Furthermore, it is only possible to launch light into the fiber in two places (through the two fiber ends).

Figure 3 of the accompanying drawings schematically illustrates a second method which is to launch the pump beam via a V-groove. A pump beam from laser diode pump source 12 is directed by a lens arrangement 14 onto a V-groove 16 extending into the inner clad 4 of the DC fiber 10. The pump beam is incident transverse to the optical axis of the DC fiber. The pump beam is coupled into the inner clad 4 by reflection from one of the V-groove facets, as illustrated. Such a launching scheme has been proposed by L. Goldberg [1]. A drawback with this approach is that typically at most around half of the area of the inner cladding is available for the launch of the pump light. Furthermore, it is difficult to access the whole numerical aperture (NA) of the fiber via the V-groove. Thus, the brightness of the pump beam is degraded upon launch into the DC fiber. Furthermore, if a user buys fiber and diode separately, it is not trivial to assemble the arrangement. There are also other similar schemes for launching pump light via a prism arrangement, but they suffer from similar shortcomings.

Figure 4 of the accompanying drawings schematically illustrates a third method which is to launch the light from a laser diode pump source 12 through a lens arrangement 14 into a further fiber 18 placed in optical contact with a DC fiber 10. The pump beam is then coupled into the DC fiber 10 through an interface between the fibers 10 and 18. The fibers 10 and 18 can be fused together, and be polished to provide an appropriate interface. An example of such a structure is described by V. P. Gapontsev and I. Samartsev [2]. A drawback with this approach is that the brightness of the pump beam is degraded upon launch into the DC fiber.

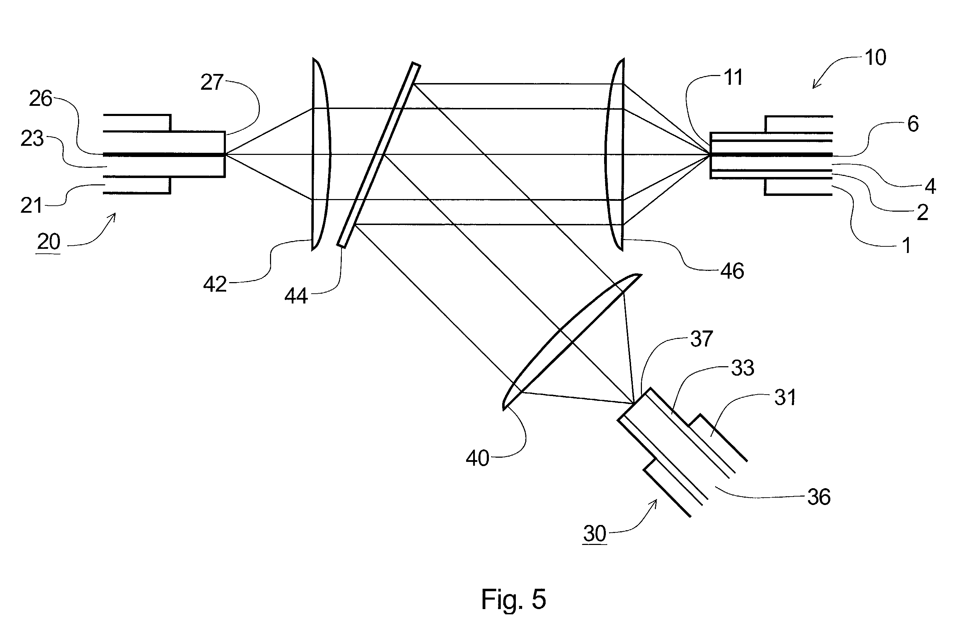

Figure 5 of the accompanying drawings schematically illustrates a fourth prior art method which is to launch light via a dichroic mirror.

A single-mode optical fiber 20 comprising a core 26, clad 23 and a protective outer coating or sheath 21 (e.g. polyurethane acrylate or other polymer) forms a signal port for delivering a signal light beam.

A multi-mode optical fiber 30 comprising a thick core 36, a clad 33 and a protective outer coating 31 (e.g. polyurethane acrylate or other polymer) forms a pump port for delivering a pump light beam.

A DC fiber 10 comprising a core 6, an inner clad 4, an outer clad 2 and a protective outer sheath 1 (e.g. polyurethane acrylate or other polymer) is arranged to receive both the signal and pump beams. The DC fiber 10 is arranged in optical alignment with the single-mode fiber 20 with an end face 11 facing a corresponding end face 27 of the single mode fiber 20. Arranged between the two end faces 27 and 11 are two lenses 42 and 46 shown as planoconvex lenses. The lens 42 is arranged to collimate the signal light beam from the single-mode fiber 20 and the lens 46 is arranged to receive the collimated signal light beam from the lens 42 and focus it with a convergence angle matched to the numerical aperture (NA) of the DC fiber 10 onto the end face 11 of the DC fiber 10 coincident with its core 6. Arranged between the two lenses 42 and 46 there is a dichroic mirror 44. The dichroic mirror 44 is arranged to receive and reflect the pump light beam from the multi-mode fiber 30 into a coaxial path with the DC fiber 10 and single-mode fiber 20. The pump light beam received by the dichroic mirror 44 is collimated by action of a lens 40 arranged proximal to the multi-mode fiber 30.

In the figure, the pump light beam is drawn as emerging from a single point on an end face 37 of the multi-mode fiber 30 and as being focused down to a single point on the DC fiber end face 11. However, it will be understood that the whole area of the end face covered by the core 36 will be emitting light, and that the pump light beam will be incident over the full area of the DC fiber end face 11 covered by the core 6 and inner clad 4. The pump light beam could have been represented by light rays emerging from different points on the fiber facet, but this approach has been avoided for clarity of representation.

It will thus be understood that this method is based on a free-space (bulk) optic arrangement to couple the light beams in free space before focusing them into an optical fiber.

Such coupling devices have been used for cladding-pumping, as described in the literature [7].

In addition, several companies, for instance E-TEK, sell similar devices in miniaturized, rugged, and fiber pig-tailed packages. These devices are similar, rather than the same, as the device shown in the figure, since they do not use DC fiber for the common port. These commercial versions of the coupler are intended for traditional core-pumping, rather than cladding pumping.

An advantage of devices of this type is that they provide a user with ready access to the input and output ports via the fiber pigtails, making them easy to handle.

However, a disadvantage of devices of this type is that the end face of the common port fiber is susceptible to optical damage, especially if the power of the tightly focused signal light beam becomes too large. This limits the amount of power that this type of coupler can handle. Although the pump power is often higher than the signal power, the fact that a multi-mode beam will usually be less tightly focused than a monomode beam makes damage from the pump beam less likely.

### SUMMARY OF THE INVENTION

According to a first aspect of the invention there is provided an optical coupler for coupling a signal light beam and a pump light beam into an optical fiber, comprising: (a) a signal port for delivering a signal light beam; (b) a pump port for delivering a pump light beam; (c) a common port for receiving the signal and pump light beams, the common port comprising an optical fiber having a core, an inner clad and an outer clad, and an extension piece joined to the common port optical fiber at an interface therebetween and terminating at an end face; and (d) an optical arrangement for directing the signal and pump light beams onto the common port, the optical arrangement being configured to focus the signal light beam onto the core at the interface between the common port optical fiber and the extension piece.

By moving the focus of the signal light beam onto the buried interface between the common port optical fiber and the extension piece, the coupler becomes less susceptible to optical damage, which is especially useful if a high power, tightly focused signal light beam is desired.

The optical arrangement may additionally be configured to focus the pump light beam onto the end face of the extension piece. The respective focal planes of the pump and signal light beams are separated, which may be of further practical benefit to high power handling.

In some embodiments, the extension piece is a bulk glass element. The bulk glass element may taper down towards its interface with the pump port optical fiber. With an appropriate taper, spot sizes can be modified without degrading brightness.

In other embodiments, the extension piece is a section of core-less glass fiber. The core-less glass fiber may be a double-clad fiber. More specifically, the core-less glass fiber may comprise an inner clad and an outer clad. Alternatively, the core-less glass fiber may be a homogeneous optical fiber without cladding. The core-less glass fiber may taper down towards its interface with the pump port optical fiber.

The common port optical fiber may taper down away from its interface with the extension piece.

The interface may be fused or spliced.

The signal port may comprise a further extension piece joined to the single-mode optical fiber.

The extension piece may advantageously form a graded index (GRIN) lens.

In specific embodiments, the signal port comprises a single-mode optical fiber, the pump port comprises a multi-mode optical fiber and the common port optical fiber is a double-clad fiber.

According to a second aspect of the invention, there is provided an optical amplifier, laser or superluminescent source comprising: (a) a pump source for generating a pump light beam; (b) an input for receiving a signal light beam; and (c) a coupler according to the first aspect of the invention, wherein the pump port is arranged to receive the pump light beam from the pump source and the signal port is arranged to receive the signal light beam from the input, and wherein the common port optical fiber is doped to provide a gain medium.

According to a third aspect of the invention, there is provided a method of coupling a signal light beam and a pump light beam into an optical fiber, comprising: (a) providing an optical fiber having a core, an inner clad and an outer clad, and an extension piece joined to the optical fiber at an interface therebetween and terminating at an end face; and (b) focusing the signal light beam onto a focal plane coincident with the interface between the common port optical fiber and the extension piece.

The method may further comprise: (c) focusing the pump light beam into a focal plane coincident with the end face of the extension piece.

According to a fourth aspect of the invention, there is provided an optical fiber termination comprising: (a) an optical fiber having a core, an inner clad and an outer clad, and terminating in an end face; and (b) an extension piece having a first face and a second face, the first face being joined to the end face of the optical fiber and the second face forming a termination.

In the optical fiber termination, the extension piece may include a tapered section that tapers out from the first face towards the second face.

According to a fifth aspect of the invention, there is provided an optical fiber termination comprising: (a) an optical fiber having a core and a clad, and terminating in an end face; and (b) an extension piece having a first face and a second face, the first face being joined to the end face of the optical fiber and the second face forming a termination, wherein the extension piece includes a tapered section that tapers out from the first face towards the second face.

In the fifth aspect of the invention, the tapered section may comprise a core joined to the core of the optical fiber. The extension piece may advantageously further comprise a beam-expansion section joined to the tapered section so as to allow expansion of a light beam emerging from the core of the tapered section.

Some other non-standard optical terminations [8, 9] are discussed in the prior art.

In an embodiment, the invention is implemented by terminating the common port with a part that does not guide the signal beam, or in any case allows the signal beam to be defocused at the air:glass interface that inherently has poor power handling capacity. The signal beam is thus expanded where it enters the glass, being focused at a buried glass:glass interface with better power handling capacity formed between the extension piece and a guiding double-clad fiber.

It will be appreciated that in all aspects and embodiments of the invention the direction of the signal light beam is reversible. However, for clarity of expression, the signal light beam is generally referred to as having a direction of propagation from the signal port to the common port throughout the present document. It will however be understood that references to the directionality of the signal beam in the claims should not be regarded as limiting, and specifically should be interpreted to include the case in which the signal light beam has a direction of propagation from the common port to the signal port.

### BRIEF DESCRIPTION OF THE DRAWINGS

For a better understanding of the invention and to show how the same may be carried into effect reference is now made by way of example to the accompanying drawings in which:
Figure 1A is a perspective view of one example of a double-clad fiber comprising a core, an inner clad and an outer clad;
Figure 1B is a cross-sectional view of another example of a double-clad fiber;
Figure 1C is a cross-sectional view of a further example of a double-clad fiber;
Figure 2 shows a first prior art scheme for coupling light into the inner clad of a double-clad fiber, known as end-pumping;
Figure 3 shows a second prior art scheme for coupling light into the inner clad of a double-clad fiber using a V-groove formed in the double-clad fiber;
Figure 4 shows a third prior art scheme for coupling light into the inner clad of a double-clad fiber using an additional fiber optically coupled to the double-clad fiber;
Figure 5 shows a fourth prior art scheme for coupling light into the inner clad of a double-clad fiber using a dichroic mirror;
Figure 6A shows a micro-optic coupler according to a first embodiment of the invention for coupling signal and pump light beams into a common port;
Figure 6B shows a variant of the first embodiment with the pump and common ports arranged alongside each other;
Figure 7A shows the common port of the first embodiment, as already shown in Figure 6A;
Figure 7B-7D show common ports according to second to fourth embodiments respectively;
Figure 8A-8D show common ports according to fifth to eighth embodiments respectively;
Figures 9A-9D show signal ports according to ninth to twelfth embodiments respectively;
Figure 10 shows an amplifier incorporating a micro-optic coupler according to any of the above embodiments;
Figure 11 shows an amplifier incorporating three micro-optic couplers according to any of the above embodiments; and
Figure 12 shows a laser incorporating a micro-optic coupler according to any of the above embodiments.

For clarity, the drawings are not to scale. For instance, typical fiber diameters are of the order of 0.1 mm, whereas fibers are typically stripped of the outer coating over a distance of ∼10 mm, i.e., 100 times the fiber diameter. The fibers shown to be stripped in the drawings over a distance approximately equal to the fiber diameter. This is not to scale.

### DETAILED DESCRIPTION

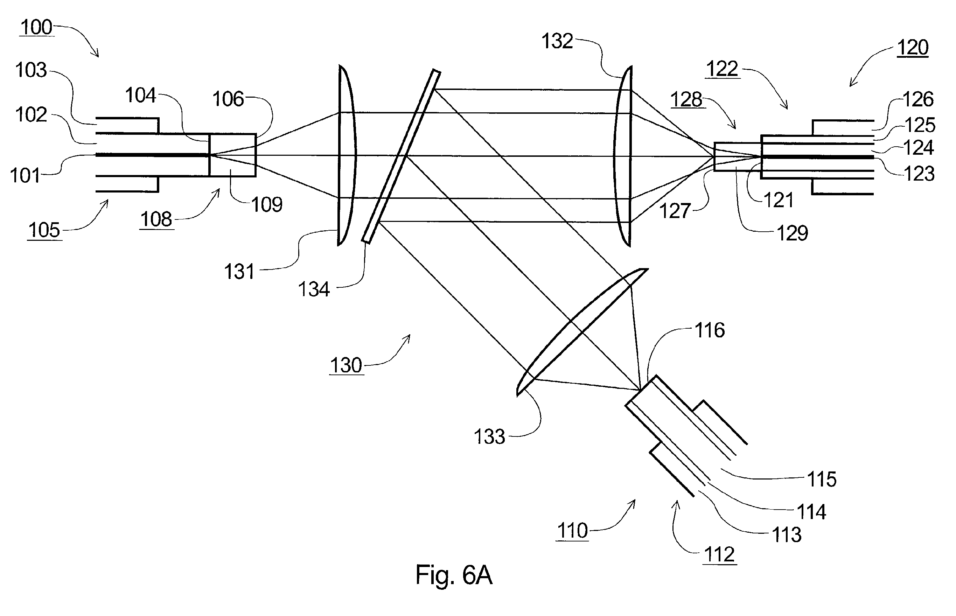

Figure 6A shows a micro-optic coupler according to a first embodiment. The coupler is a three port device having a signal port 100, a pump port 110 and a common port 120. The function of the coupler is to combine a signal light beam from the signal port 100 and a pump light beam from the pump port 110 into the common port 120. The coupler may also operate with the signal beam traveling in the opposite direction, i.e. out of the common port. This function is performed by a bulk optic or free-space optical arrangement 130.

The signal port 100 comprises a single-mode optical fiber 105 comprising a core 101, a cladding 102 and a polymer sheath 103. At its termination, the single-mode fiber 105 is joined by fusing to an extension piece 108 at a buried interface 104. Fusion may be performed optically [5] or with an electrical arcing process [6]. (Alternatively, splicing could be performed without fusing, but fusion splices are generally preferred). The extension piece 108 is a core-less fiber strand that terminates at a face 106 which forms a glass:air interface. (This assumes that the bulk optic arrangement 130 is in air, not some other medium, as is possible). The extension piece 108 allows the beam to expand before reaching the glass:air interface 106. Ancillary components such as mounts, anti-reflection coatings etc. are not shown for the sake of clarity.

The pump port 110 comprises a multi-mode optical fiber 112 having a large core 115, a clad 114 and a polymer sheath 113. The multi-mode optical fiber 112 is arranged with its optical axis at an obtuse angle θ (an obtuse angle is an angle between 90 and 180°) relative to that of the single-mode optical fiber 105 at the signal port 100. Ancillary elements such as mounts, anti-reflection coatings etc. are not shown for the sake of clarity.

The common port 120 comprises a double-clad (DC) fiber 122 having a core 123, an inner clad 124, an outer clad 125 and a polymer sheath 126. The outer clad may be made of a glass with low refractive index. An extension piece 128 comprising a strand of core-less optical fiber 129 is joined to the DC fiber 122 at an interface 121 therebetween. The core-less optical fiber has a diameter matched to the outer dimension of the DC fiber's inner clad 124. The extension piece 128 extends to terminate at an end face 127. The outer cladding 125 of the DC fiber can be a glass with a low refractive index, and the protective coating can be a polymer. A polymer coating makes the fiber less fragile and protects it against scratches, water penetration, etc. In other kinds of DC fibers the outer cladding may be a polymer with a low refractive index. If so, this polymer can also serve as the protective coating. Alternatively, a secondary polymer can be used for additional protection.

The optical arrangement 130 is for directing the signal and pump light beams onto the common port. More specifically, the optical arrangement is configured to focus the signal light beam onto the entrance aperture of the core 123. The focal plane for the signal light beam focus thus lies in the interface 121 between the common port optical fiber 122 and the extension piece 128. The optical arrangement 130 is additionally configured to focus the pump light beam onto the end face 127 of the extension piece. The signal and pump beams are thus focused on different focal planes.

The optical arrangement 130 is now described in more detail. The optical elements that relate to transfer of the signal light beam from the signal port 100 to the common port 120 are considered first. The single mode fiber 105 of the signal port and the DC fiber 122 of the common port are optically aligned, with two lenses therebetween. A first lens 131 collimates the signal light beam after output from the signal port. A second lens 132 receives the collimated signal light beam from the first lens 131 and focuses it onto the core or the DC fiber 122 at the interface 121. This is highly significant, since, as a result of the common port extension piece 128, the focus is buried beneath the air:glass interface which is prone to optical damage (e.g. by heating) at high powers. The power density of the signal light beam at the air:glass interface 127 is thus greatly reduced in comparison to the prior art device shown in Figure 5. It is noted that although collimation is usually convenient, it is not essential. For example, a design using an intermediate focus of one or more of the beams is also possible.

The optical elements that relate to transfer of the pump light beam from the pump port 110 to the common port 120 are now considered. A third lens 133 is arranged to collimate, or near collimate, the large area pump beam emerging from the large cross-section core 115. As already mentioned in relation to Figure 5, it will be understood that the whole area of the end face 116 covered by the multi-mode fiber core 115 will be emitting light. Representing the pump light beam as a point source has been chosen for clarity of representation. A dichroic mirror 134 is arranged between the first and second lenses 131 and 132, and inclined at an angle, so as to reflect the pump light beam received from the third lens 133 towards the common port and coaxial with the principal optical axis formed by the single mode and DC fibers 100 and 122, and the first and second lenses 131 and 132. The third lens 133 and dichroic mirror 134 are arranged so that the second lens 132 does not focus the pump light beam onto the same focal plane as the signal light beam, but rather onto the end face 127 of the common port extension piece 128. This is perfectly adequate for coupling the pump light beam into the inner clad 124 of the DC fiber 122, and serves to further reduce peak power densities at the common port by spatially separating the localization of the peak power densities from the pump and signal light beams.

The pump beam is focused onto the end facet because this is the location of the entrance pupil (i.e. aperture) to the pump waveguide. The pump intensity (power density) is then essentially preserved as the pump propagates through the coreless extension into the DC fiber. Degradation of brightness is thus avoided. The pump intensity will therefore be the same at the entrance to the DC fiber as it is at the entrance to the extension.

Since the beam expansion in the extension pieces 108 and 128 does not degrade the beam brightness, the length of the extension pieces can be chosen independent of brightness considerations, provided that the extension pieces are not so long that the expanding signal beam reaches the lateral surfaces of 108 or 128.

The glass:air interfaces (facets) of the lenses 131, 132, 133 and ports 106, 116 and 127 preferably have anti-reflection (AR) coatings (not shown).

The lenses 131, 132 and 133 may be cemented or otherwise joined directly to the extension pieces 108, 128 or multimode fiber 110 instead of being mounted spaced apart as illustrated.

It may also be possible to dispense with one or more of the separate lenses 131 and 132 by substituting the flat air:glass interfaces 106 and 127 of the signal and common port extension pieces with curved interfaces, in the manner described in reference [3]. A similar approach could be adopted with the pump port lens 133.

Dispersion, leading to different beam paths for different wavelengths, can affect the performance of a device. However, there are several methods for reducing the effect of chromatic dispersion, e.g., the use of achromatic lenses. Furthermore, even if the characteristics of lenses, etc., are somewhat wavelength dependent, the imaging system should image the common port onto the signal port at the signal wavelength and onto the pump port at the pump wavelength. Because the dichroic mirror separates the paths of the different wavelength pump and signal light, compensation of chromatic dispersion becomes straightforward.

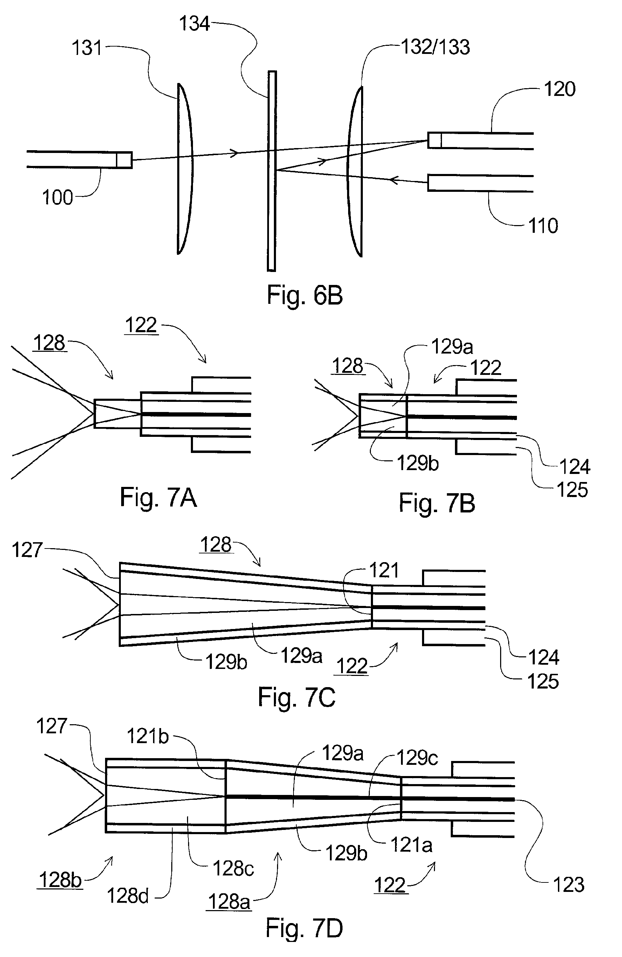

Figure 6B shows a variant of the first embodiment with the pump port 110 and the common port 120 arranged alongside each other facing the signal port 100. Only the principal components are shown in the figure. The details of the principal components can be taken from Figure 6A. This variant may be considered to be a modification of the Figure 6A arrangement in which the angle between pump port 110 and common port 120 is increased to 180° and the lenses 132 and 133 "merged" into a single lens 132/133. The signal port lens 134 is arranged as before and the dichroic mirror 134 is aligned substantially at 90° to the optical axis between the signal and common ports. This arrangement is advantageous in that (i) there is one less component through the combination of the separate lenses for the common and pump ports into a single lens and (ii) the coupler package can be made slimmer by the arrangement of the common and pump ports alongside each other.

Having described the optical design of a coupler with specific common port and signal port extension pieces, a number of alternative extension piece designs are now discussed.

Figure 7A shows once more, for comparison, the arrangement used in the above-described coupler, namely a core-less fiber extension piece 128 joined end-to-end with a DC fiber 122.

Figure 7B shows an alternative arrangement having an extension piece 128 with a radially inner part 129a dimensionally matched to the outer diameter of the inner clad 124 of the DC fiber and a radially outer part 129b dimensionally matched to the outer clad 125 of the DC fiber. As well as dimensionally matching, these parts preferably are also matched in terms of their refractive indices to the DC fiber's inner and outer dads. The radially inner and outer parts may be termed inner and outer dads (in which the extension piece fiber would be described as coreless), or alternatively may be termed as a core and clad. The labeling is semantic.

An advantage of a extension fiber with matched outer diameter is that it is easier to fusion splice it to the DC fiber with good results. Furthermore, a DC fiber with a glass outer cladding is more robust, since scratching is no longer such a problem.

Figure 7C shows an alternative to the longitudinally invariant extension pieces (termination fibers) shown in Figures 7A and 7B. In this design, a tapered extension piece 128 is provided. The extension piece 128 tapers out from its interface 121 with the DC fiber 122 to provide a larger end surface 127. The length of the fiber taper may be several millimeters. The extension piece 128 is illustrated as having an inner part 129a and outer part 129b matched to the DC fiber's inner and outer dads 124 and 125 respectively. These features are similar to those already described in relation to Figure 7B, but have the additional functionality in the tapered extension piece of guiding a diffuse beam (such as the multimode pump light beam) incident over a large area on the interface 127 into the inner clad 124 of the DC fiber 122.

The taper has the effect of adiabatically transforming an incident (or emitted) light beam from a small-NA, large-area beam to a large-NA small-area beam, without degrading the brightness of the light beam. Specifically, in the above-described coupler, the pump light beam will be adiabatically transformed in this way.

A limitation with the arrangement of Figure 7C is that, in the context of the above-described coupler, the diffraction angle of the signal light beam needs to be smaller than the taper angle to avoid the signal light beam reaching the lateral boundaries of the fiber and thus being degraded. This restricts the approach of Figure 7C to fibers with relatively low core NAs.

Figure 7D shows an arrangement that overcomes this limitation. In this design, a DC fiber 122 is joined at an interface 121a to a tapered section 128a that is made from a section of DC fiber and thus has a core 129c as well as an inner clad 129a and outer clad 129b. At its other end, the tapered section 128a is joined at an interface 121b to a further section of fiber 128b which is not tapered and comprises an inner part 128c and an outer part 128d. A two-part extension piece is thus provided. The fiber section 128b may be omitted, but is preferred for the reasons now described.

The core 129c in the tapered section 128a will generally taper in diameter with the outer dimensions of the tapered section, since this is easier to manufacture. Such a tapered core 129c can efficiently couple light into the core of the fiber (e.g. as part of the common port in the above-described coupler). The further fiber section 128b serves to allow a light beam emerging from (or entering into) the core 129c to diverge (or converge) without degrading its brightness, thereby to provide the desired power density reduction of any signal being coupled out of (or into) the DC fiber core 123 at the sensitive air:glass interface 127.

In the arrangement of Figure 7D, the divergence of the signal beam decreases as it propagates out through the taper (given that the beam expands and the brightness remains the same). Thus, the core-less section should be longer to achieve the same amount of expansion of the signal beam. For instance, light from a 0.12 NA core that is expanded around four times in a taper exits with an NA value of 0.03 (if brightness is conserved). (It is noted that references to NA refer to the beam divergence/convergence from/to the fiber, not to the internal NA of the fiber). In a silica fiber, this implies a divergence half-angle of 0.02 radians. It is noted that divergence and convergence half-angles θ are related to the NA as NA = *n* sin θ ≈ *n* θ (for small angles with θ in radians). The refractive index *n* of silica is 1.46, so an NA of 0.03 leads to θ ≈ 0.02 rad. This is so small that the final free-propagation fiber section 128b can be several millimeters long for appropriate signal-beam expansion to take place. Such a long fiber can be handled relatively easily.

In general, a large separation between signal and pump focal planes will require that the propagating beams have small NA values. Furthermore, in general, low-NA beams are easier to manage in lenses. This is a general advantage of using a taper, which increases the spot size at the interface while decreasing the NA (if adiabatic). In particular, the pump waveguide may have an NA that is so high (∼0.5 or even higher) that it becomes difficult to handle a corresponding pump beam with free-space optics like lenses. Specifically, the taper is advantageous for the signal and/or pump light beams in the above-described coupler.

Figure 8A-8D show examples of an alternative approach in which, instead of making an extension piece from glass fiber, as in the designs of Figures 7A-7D, an extension piece made of a bulk optical element is provided. The bulk optical elements differ from the above-described fiber-like extensions (including the tapered ones) in that they do not guide the pump. In the bulk optical elements, the pump beam experiences "free-space" propagation (or is refracted in case of a gradient index (GRIN) lens).

Figure 8A shows a cylindrical block 128 fused to the DC fiber 122 to seamlessly connect them. The materials of the fiber and block are chosen so as to facilitate fusing. Modal reflections of the signal light can be suppressed at the junction, by using materials with matched refractive indices, by using an angled interface, or both. The interface between the block and the surrounding medium (typically a gas) is preferably AR-coated to reduce losses and further reduce the modal reflectivity. While it is possible to glue the fiber to the block instead of fusing it, a fused junction will usually be preferred since it will usually provide a higher damage threshold and lower reflections than other options. The lens 132 can be placed at some distance away from the block 128 (as illustrated), or formed directly in the block by a curved surface (not shown), or be a separate element attached to the block (not shown). No guiding effects occur at the boundary of the bulk optical element 128. The bulk optical element 128 should thus be wide enough so that the pump beam has no contact with the lateral surfaces during its propagation.

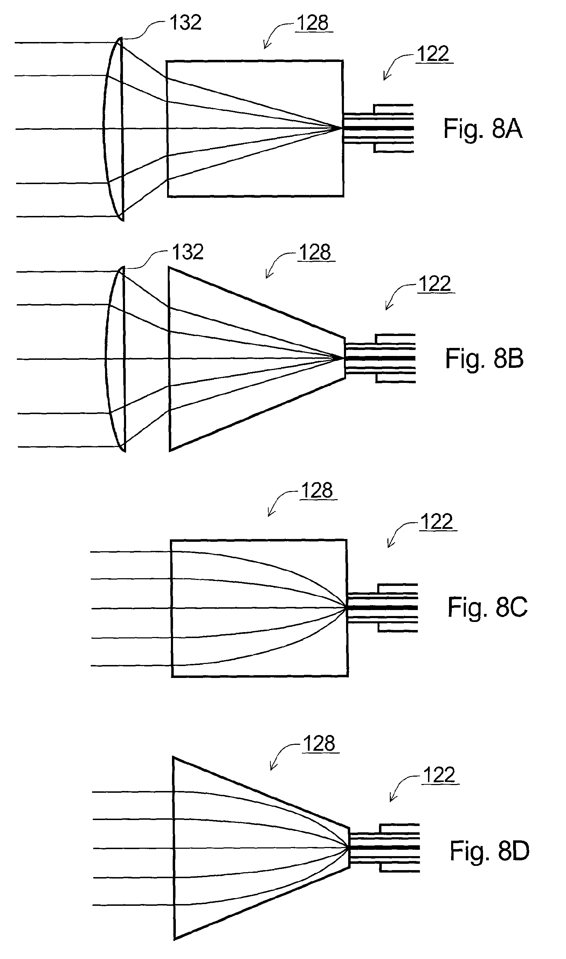

Figure 8B is an alternative design in which a conical block 128 forms the extension piece and is fused to the DC fiber 122. The block is tapered which facilitates fusion. The light propagation in the block is not changed because of the taper. (This contrasts with the fiber taper described above, where the fiber guides the pump and signal, and NAs and spot sizes are changing within the fiber).

Figures 8C and 8D show alternative extension pieces 128 for the common port made respectively of cylindrical and conical GRIN rod lenses. In both cases, the extension piece 128 is joined to the common port DC optical fiber 122. The length of the GRIN rod is selected so as to provide appropriate focal positions for the pump and signal light beams. This approach allows a separate collimating lens to be dispensed with. The conical shape has the advantage of providing a thinner glass element adjacent to the joint with the optical fiber, thereby making the splicing or fusing easier to perform.

In general, the common port extension piece can be a glass (or other material) body of arbitrary size e.g., a cylinder with 1 mm or even 1 cm diameter. The signal can then be spread to very large diameter before exiting the extension piece through a surface of good optical quality. The geometric design of the extension piece should ensure that the signal light beam propagates to the DC fiber core without interacting with any side surfaces or other interfaces that may degrade the signal light beam. The pump light beam should also not interact with the lateral surfaces of the block extension piece.

An added advantage of the designs shown in Figures 8A-8D is that they provide a rigid body in which the fiber can be held without compromising the NA of the pump waveguide. In the case that the outer cladding is a polymer, it is difficult to hold the fiber stably, since the polymer is soft. Although it is possible to remove the outer cladding from the fiber, and hold the fiber directly on the inner cladding, this can be unreliable, since the inner cladding guides high-power pump radiation. Furthermore, the fiber should be held with a dielectric rigid material with a surface that does not scatter light, and with a refractive index that is lower than that of the (polymer) outer cladding, lest the guiding properties of the pump waveguide be compromised. This restricts the range of suitable materials, and complicates the structure. Alternatively, it is possible to splice a fiber with a glass outer cladding (which is rigid). However, it is often not possible to make a glass outer cladding with as low a refractive index as a polymer outer cladding, which means that this approach degrades the overall guiding capacity of the pump waveguide (the pump NA becomes smaller).

By contrast, a bulk optical extension piece, such as those shown in Figures 8A-8D, that does not guide the pump (or signal) beam, can be readily mounted and fixed, e.g., in a ferrule. The extension pieces are typically rigid (e.g., made from a glass), so a high-NA, polymer-clad fiber can be mounted rigidly in this way. Moreover, the approach is much more simple to implement and universally applicable than that described in reference [4].

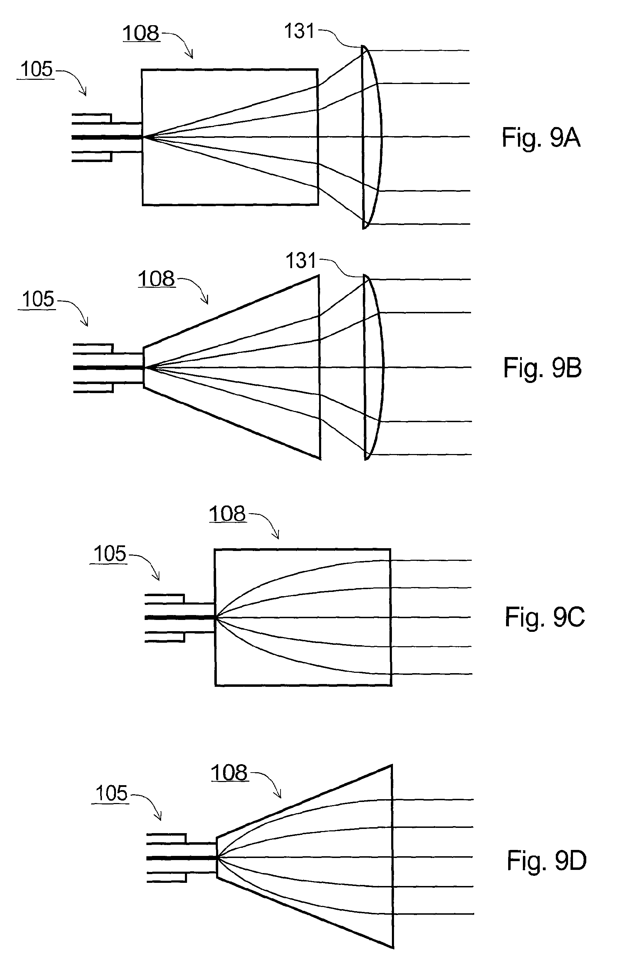

Figures 9A-9D show signal ports according to ninth to twelfth embodiments respectively, which are analogous to the designs for the common port shown in Figures 8A-8D respectively.

Figure 9A shows a cylindrical glass block arranged as an extension piece 108 on a single mode fiber 105. An externally mounted collimating lens 131 is also shown.

Figure 9B shows a tapered conical glass block arranged as an extension piece 108 on a single mode fiber 105. An externally mounted collimating lens 131 is also shown.

Figures 9C and 9D show alternative extension pieces 108 for the signal port made respectively of cylindrical and conical GRIN rod lenses and joined to the signal port monomode optical fiber 105. The length of the GRIN rod is selected so as to provide appropriate focal positions for the signal light beam. This approach allows the collimating lens 131 to be dispensed with. The conical shape has the advantage of providing a thinner glass element adjacent to the joint with the optical fiber, thereby making the splicing or fusing easier to perform.

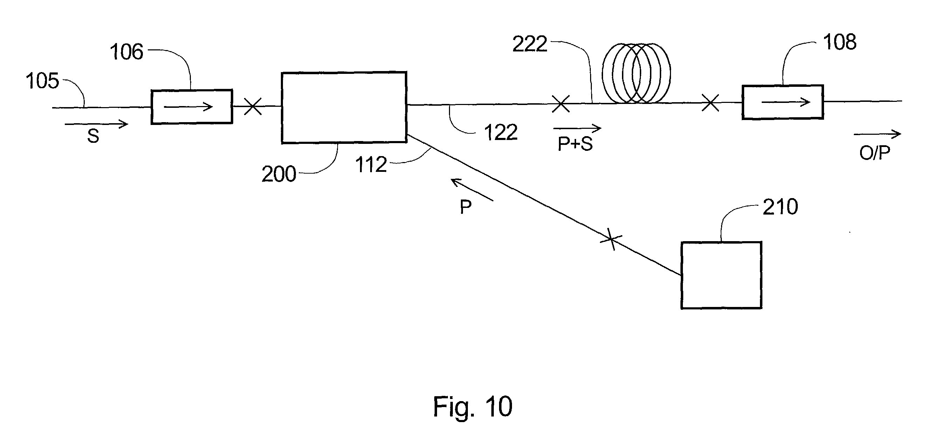

Figure 10 shows an amplifier incorporating a micro-optic coupler 200 according to any of the above embodiments. A pump source 210 is arranged to deliver a pump light beam to one end of a multi-mode fiber 112 the other end of which outputs the pump light beam to the coupler 200. An input signal light beam is received at one end of a monomode fiber 105 the other end of which outputs an input signal light beam to the coupler 200. An isolator 106 is also arranged in the path of the input signal light beam. The common port of the coupler combines the signal and pump light beams into a passive DC fiber 122 which is coupled to an active RE doped DC fiber 222 where amplification occurs. An isolator 108 is also arranged in the output path. If bi-directional operation is desired, the isolators 106 and 108 can be removed. It will be understood that the passive DC fiber 122 could be omitted so that the active DC fiber 222 is directly linked to the micro-optic coupler 200. Fiber-to-fiber joints, e.g., splices, are illustrated with crosses in the figure.

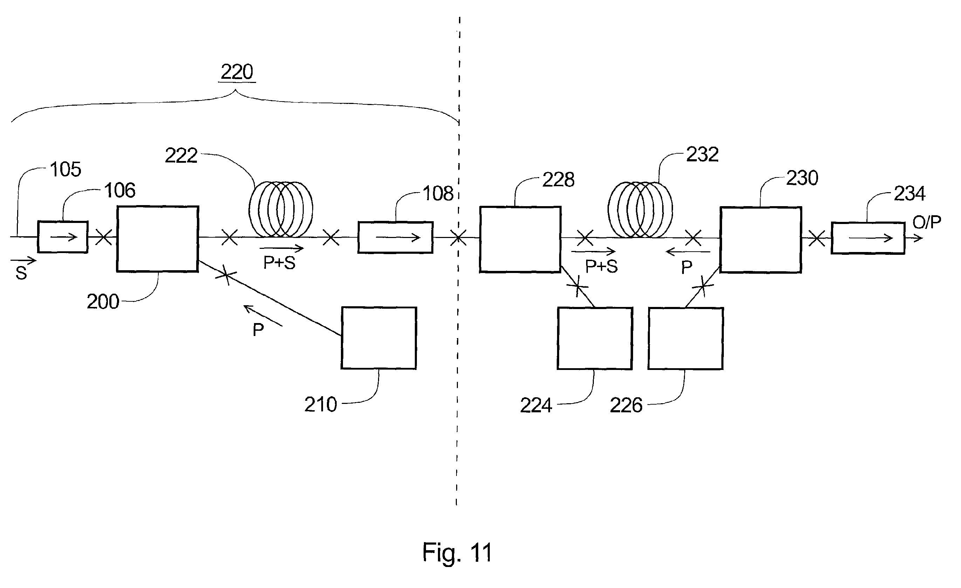

Figure 11 shows an amplifier incorporating three micro-optic couplers according to any of the above embodiments. The components 220 are those of the embodiment of Figure 10. This amplification stage is cascaded with two further pump sources 224 and 226 which inject additional pump signal light beams into the device by respective additional micro-optic couplers 228 and 230. The micro-optic coupler 228 is arranged to receive the output from the first amplification stage 220 as an input through its signal port. The common port of the micro-optic coupler 228 leads to an active DC fiber 232 which may be doped with a rare-earth element or any other suitable active dopant. The micro-optic coupler 230 is arranged with its common port facing towards the active DC fiber 232 so as to deliver the pump beam from the pump source 226 into the active DC fiber 232 so that the active DC fiber 232 is pumped by two separate pump sources. Finally, an isolator 234 is arranged in the output path, which leads from the signal port of the micro-optic coupler 230.

The amplifiers of Figures 10 and 11 can be used as superluminescent sources in the absence of an input signal.

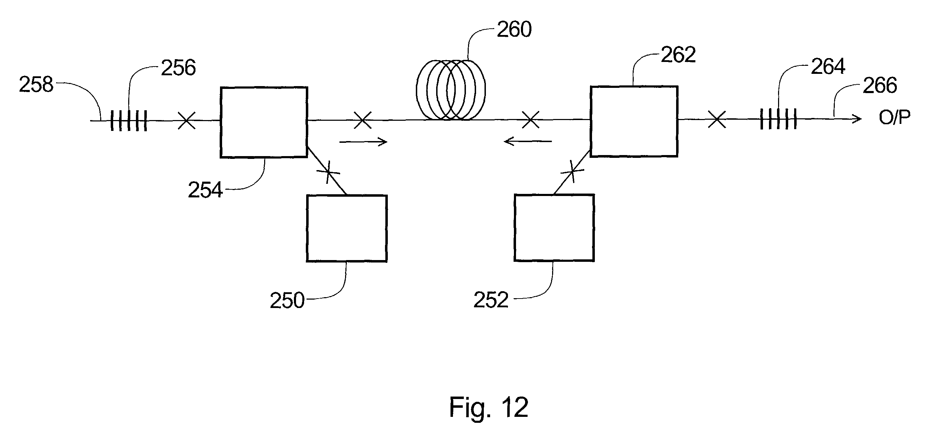

Figure 12 shows a laser incorporating a micro-optic coupler according to any of the above embodiments. A pair of micro-optic couplers 254 and 262 according to any of the above embodiments with respective pump sources 250 and 252 are arranged back to back with their common ports facing each other, being linked by a section of active DC fiber, e.g. rare earth doped, which forms the gain medium for the laser. The signal ports of the micro-optic couplers 254 and 262 respectively lead to a pair of high reflectivity fiber Bragg gratings 256 and 264 which define the laser cavity. The grating 264 forms the output coupler so that laser emission is output from an output waveguide 266.

It should be noted that many details and needed components have been omitted in the figures. For instance, fibers, mirrors and lenses need to be secured in some mount. The different assemblies are also preferably enclosed in a housing.

While the discussion above has primarily treated the common port, similar arrangements are possible in the other ports as well. These arrangements need to fulfill fewer requirements and can be simpler, since they only have to deal with the signal or the pump beam. On the other hand, the fiber arrangement in the common port is perfectly adequate for the other ports as well. It can handle the pump beam as well as the signal beam. This can be advantageous from a manufacturing viewpoint, where the number of different components and designs is preferably kept to a minimum.

It will be understood that references to air:glass interfaces are not intended to be limiting. Packaged devices may operate in sealed environments in some other ambient gas or in vacuum. Moreover, non-glass materials (e.g. crystals, semiconductor materials) may be used for some of the optical components.

Some specific design aspects of the extension pieces and couplers are now discussed, together with some example parameter values.

### Modal Reflectivity

Modal reflectivity is an important property for a coupler. Modal reflectivity is a measure of the proportion of light emerging from a fiber core that is reflected back into a guided mode (or guided modes) of the core. Normally, modal reflectivity should be sufficiently low to prevent unwanted effects such as spurious lasing. A modal reflectivity value of -60 dB may be desired, for example.

Modal reflectivity can be suppressed with AR-coatings and with angled termination ends. The terminations described here for improved power handling have the additional benefit that modal reflections are reduced, since the component of the signal light beam that is returned to the common port fiber core after reflection(s) at the end face of the extension piece will be expanded greatly. The reflected component of the signal light beam will thus be much larger than the core diameter and so couple poorly to the core. For instance, with an extension piece diameter of 1 cm diameter, the area of the reflected signal light beam would be something of the order of a million times (60 dB) larger than the core area, indicating a return loss of 60 dB just from this geometric factor. With a smaller extension piece, the effect is smaller.

In addition, the terminating end face may be angled with respect to the propagation direction of the signal beam (or optical axis of the optical fiber) so that the propagation angle of the back-reflected signal light may be largely outside the acceptance angle (given by the NA) of the fiber core. This would further reduce the modal reflectivity. The limited reflectivity of the glass:air surface of the end face will also reduce the overall modal reflectivity. This reflectivity is around 4% (-14 dB) if the end face is uncoated, but in practice, the surface is normally AR-coated which will further reduce the end face reflectivity.

In summary, obtaining a low modal reflectivity from the terminating end face, e.g. < -60 dB, will be relatively simple to achieve with embodiments of the invention.

Modal reflectivity at the buried interface between the fiber and extension piece also needs to be considered, since this interface is also a source of reflections. For instance, a refractive index step of 0.005 results in a reflectivity of ∼ -55 dB. This may be close to the reflectivity obtained when a fiber with a germanosilicate core in a silica cladding is spliced to a core-less silica fiber.

Generally, to reduce modal reflectivity from the buried interface, it is desirable to match the refractive index of the extension piece as closely as possible to the effective refractive index of the fiber core (or refractive indices of multiple core modes in the case of coupling into a multimode fiber).

### Example Parameter Values: Signal Port

The signal light beam is propagated in the core of the single-mode fiber 105 with a certain numerical aperture. Outside the core, the signal beam expands at an angle determined by this NA and the refractive index of the medium. For small angles, the expansion angle in radians (half-apex) is given by the NA divided by the refractive index. Thus, for a standard fiber with an NA of 0.12 and a refractive index of 1.46, the angle becomes ∼0.08 rad or 4.7°. (This is a simplification, since the intensity of a light beam (mode) decreases gradually rather sharply as the angle increases).

The length of the core-less fiber is chosen to give sufficient expansion of the signal light beam before it transits the air:glass interface 106, while at the same time making sure that the signal light beam does not reach the lateral surface of the core-less fiber 108, since this would degrade the beam and may cause multi-path interference effects. The signal light beam is preferably expanded to a mode area of at least 1000 µm² at the glass:air interface 106. In practice, given the gradual decline of signal intensity with angle, the 1/e² intensity diameter of the expanding signal light beam should reach around 50% or at most 67% of the diameter of the core-less fiber 108. Thus, with a 125 µm fiber diameter (which is a standard diameter) the core-less fiber length may be up to half or two thirds of 62.5 µm / (0.12 /1.46) = 760 µm. or 0.4 - 0.5 mm. The cross-sectional area of the beam will then have increased by around 50 times or more compared to its area in the core, assuming a core diameter of 8 µm, which is a standard value. The signal port would then be able to withstand 50 times higher power insofar as the damage level for light guided in the core does not then become the limiting factor.

For embodiments that use a bulk glass extension piece, the piece may be ∼1 mm in diameter and 1 - 10 mm long.

For embodiments that use a glass fiber extension piece, the piece may be ∼1 mm long or shorter. A core-less fiber 108 shorter than 1 mm will be difficult to splice or fuse onto the single-mode fiber 105. However, if shorter lengths are desired, it is possible to splice or fuse a longer piece of coreless fiber 108 to the monomode fiber 105, and then cleave and polish it until as suitable fiber length remains.

For embodiments that incorporate a taper at the signal port, the taper may be several millimeters long, with a divergence angle of 0.1 rad.

It is also possible to splice a core-less fiber with a larger outer diameter to the monomode fiber. Such a mismatched splice or fuse joint is more difficult to achieve, but still possible, provided that the mismatch is not too large. It is at least possible to splice or fuse a fiber with 50% larger diameter and possibly even 100% larger diameter to the monomode fiber. A larger outer diameter of the coreless fiber allows for a proportionally longer core-less fiber, with a corresponding lowering of the power density of the signal light beam at the air:glass interface 106.

### Example Parameter Values: Common Port

Double-clad fibers are available with outer diameters in the range 80 - 500 µm, core diameters of 5 - 20 microns or even more, core NA of 0.05 - 0.3, and cladding NAs of 0.2 - 0.5 or even more. A fiber outer diameter of 125 µm is a preferred diameter. In that case, a preferred diameter of the inner cladding is ∼100 µm, while the core may be single-moded at the signal wavelength with an NA of 0.1 - 0.15.

Furthermore, the signal light beam preferably has a mode area of at least 1000 µm² at the glass:air interface 127.

For embodiments that use a bulk glass extension piece, the piece may be ∼1 mm in diameter and 1 - 10 mm long.

For embodiments that use a glass fiber extension piece, the piece may be ∼1 mm long or shorter.

For embodiments that incorporate a taper at the common port, the taper may be several millimeters long, with a divergence angle of 0.1 rad.

The common port optical fiber may be a rare-earth doped (laser-active) DC fiber, but is preferably made from a passive DC fiber, which is then spliced or fused to a rare-earth doped DC fiber with appropriate geometrical parameters. The passive DC fiber should be chosen to match the active DC fiber.

### Example Parameter Values: Powers and Wavelengths

The device is envisaged for use with a pump power of at least 1 W, up to 10 W or even more. Average signal powers depend on pump power and efficiency, and also on whether the coupler is placed in an input or output end of the fiber. The coupler may be used with pulsed devices, in which case the peak signal power can be much higher than the average power.

The pump wavelength may be ∼808 nm and the signal wavelength ∼900 nm, ∼1050 nm, or ∼1350 nm (in case of Nd-doped fibers).

The pump wavelength may be ∼915 nm or ∼975 nm and the signal wavelength may be ∼980 nm or 1100 - 1150 nm in case of Yb-doped fibers.

The pump wavelength may be ∼915 nm or ∼975 nm and the signal wavelength may be 1520 - 1620 nm in case of Er/Yb-doped fibers.

The pump wavelength may be ∼980 nm and the signal wavelength may be 1520 - 1620 nm in case of Er-doped fibers.

The pump wavelength may be ∼800 nm and the signal wavelength may be ∼2000 nm in case of Tm-doped fibers.

Other wavelength combinations are also possible, with these or other active dopants (e.g., rare earth ions).

### REFERENCES

- [1]: US 5,854,865
- [2]: US 5,999,673
- [3]: US 4,737,006
- [4]: US 5,966,490
- [5]: US 6,033,515
- [6]: US 4,962,988
- [7]: P. Bousselet, M. Bettiati, L. Gasca, M. Goix, F. Boubal, C. Sinet, F. Leplingard, and D. Bayart, "+26 dBm output power from an engineered cladding-pumped Yb-free EDFA for L-and WDM applications", in Optical Fiber Communication, OSA Technical Digest (Optical Society of America, Washington, DC 2000), WG, pp. 114-116.
- [8]: US 6,125,225
- [9]: WO 00/39620

## Claims

1. An optical coupler for coupling a signal light beam and a pump light beam into an optical fiber, comprising:
(a) a signal port for delivering a signal light beam;
(b) a pump port for delivering a pump light beam;
(c) a common port for receiving the signal and pump light beams, the common port comprising an optical fiber having a core, an inner clad and an outer clad, and an extension piece joined to the common port optical fiber at an interface therebetween and terminating at an end face; and
(d) an optical arrangement for directing the signal and pump light beams onto the common port, the optical arrangement being configured to focus the signal light beam onto the core at the interface between the common port optical fiber and the extension piece.

2. An optical coupler according to claim 1, wherein the extension piece is a bulk glass element.

3. An optical coupler according to claim 2, wherein the bulk glass element tapers down towards its interface with the pump port optical fiber.

4. An optical coupler according to claim 1, wherein the extension piece is a section of core-less glass fiber.

5. An optical coupler according to claim 4, wherein the core-less glass fiber comprises an inner clad and an outer clad.

6. An optical coupler according to claim 4, wherein the core-less glass fiber is a homogeneous optical fiber without cladding.

7. An optical coupler according to claim 4, 5 or 6, wherein the core-less glass fiber tapers down towards its interface with the pump port optical fiber.

8. An optical coupler according to any one of the preceding claims, wherein the common port optical fiber tapers down away from its interface with the extension piece.

9. An optical coupler according to any one of claims 1 to 8, wherein the interface is fused.

10. An optical coupler according to any one of claims 1 to 8, wherein the interface is spliced.

11. An optical coupler according to any one of the preceding claims, wherein the signal port comprises a single-mode optical fiber.

12. An optical coupler according to claim 11, wherein the signal port comprises a further extension piece joined to the single-mode optical fiber.

13. An optical coupler according to any one of the preceding claims, wherein the pump port comprises a multi-mode optical fiber.

14. An optical coupler according to any one of the preceding claims, wherein the common port optical fiber is a double-clad fiber.

15. An optical coupler according to any one of the preceding claims, wherein the optical arrangement is additionally configured to focus the pump light beam onto the end face of the extension piece.

16. An optical coupler according to any one of the preceding claims, wherein the extension piece forms a GRIN lens.

17. An optical amplifier, laser or superluminescent source comprising:
(a) a pump source for generating a pump light beam;
(b) an input for receiving a signal light beam; and
(c) a coupler according to any one of the preceding claims, wherein the pump port is arranged to receive the pump light beam from the pump source and the signal port is arranged to receive the signal light beam from the input, and wherein the common port optical fiber is doped to provide a gain medium.

18. A method of coupling a signal light beam and a pump light beam into an optical fiber, comprising:
(a) providing an optical fiber having a core, an inner clad and an outer clad, and an extension piece joined to the optical fiber at an interface therebetween and terminating at an end face; and
(b) focusing the signal light beam onto a focal plane coincident with the interface between the common port optical fiber and the extension piece.

19. A method according to claim 18, further comprising:
(c) focusing the pump light beam onto a focal plane coincident with the end face of the extension piece.

20. An optical fiber termination comprising:
(a) an optical fiber having a core, an inner clad and an outer clad, and terminating in an end face; and
(b) an extension piece having a first face and a second face, the first face being joined to the end face of the optical fiber and the second face forming a termination.

21. An optical fiber termination according to claim 20, wherein the extension piece includes a tapered section that tapers out from the first face towards the second face.

22. An optical fiber termination comprising:
(a) an optical fiber having a core and a clad, and terminating in an end face; and
(b) an extension piece having a first face and a second face, the first face being joined to the end face of the optical fiber and the second face forming a termination, wherein the extension piece includes a tapered section that tapers out from the first face towards the second face.

23. An optical fiber termination according to claim 21 or 22, wherein the tapered section comprises a core joined to the core of the optical fiber.

24. An optical fiber termination according to claim 23, wherein the extension piece further comprises a beam-expansion section joined to the tapered section so as to allow expansion of a light beam emerging from the core of the tapered section.
